# EUROPEAN PATENT APPLICATION

(11) **EP 1 843 613 A1**
(43) Date of publication of application: **10.10.2007**
(21) Application number: 06251864.2
(22) Date of filing: 03.04.2006
(51) Int. Cl.: H04Q 7/38

(54) **System and method for facilitating determination of mode and configuration of a wireless user equipment (UE) device**

(71) Applicant: Research In Motion Limited, Waterloo, Ontario N2L 3W8 (CA)
(72) Inventor: Bumiller, George Baldwin, Ramsey, NJ 07446 (US); Buckley, Adrian, Tracy, CA 95376 (US)
(74) Representative: Fennell, Gareth Charles

(57) **Abstract**

A system and method for facilitating determination of mode and configuration of a wireless user equipment (UE) device (700) operable with a plurality of radio access technologies (RATs) in a radio network environment (100). In one exemplary embodiment, the wireless UE device (700) is operable to determine its geographic area location. A logic module (748) of the wireless UE device (700) is adapted for interrogating a location database having time-stamped location information to determine which RATs have coverage in the geographic area location. Another logic module (748) is adapted for interrogating a user schedule database. Responsive to the interrogation of the location and user schedule databases, the wireless UE device's mode of operation is configured accordingly.

## Description

### FIELD OF THE DISCLOSURE

The present patent disclosure generally relates to communication networks. More particularly, and not by way of any limitation, the present patent application is directed to a scheme for facilitating determination of mode and configuration of a wireless user equipment (UE) device operable in radio network environment comprising a wireless access network space that may be interconnected to a wide area cellular network space.

### BACKGROUND

Wireless access networks have become a key element of a variety of telecommunications network environments. As to enterprise networks, they provide convenient access to network resources for workers carrying portable computers and mobile handheld devices, and for guests or temporary workers similarly equipped. They also provide a cost-effective alternative to relocating physical Ethernet jacks in environments where facilities are moved or changed frequently. In addition, wireless access points operable with diverse communication/computing devices are becoming ubiquitous in public environments such as, e.g., hotels, airports, restaurants, and coffee shops. With the increase in high-speed Internet access, the use of access point(s) in the users' homes is also envisioned and has started for other applications.

Concomitantly, several developments in the UE device arena are also taking place to take advantage of the capabilities offered by wireless access networks. Of particular interest is the integration of cellular phones with the capability to interface with a wireless access network such as a Wireless Local Area Network (WLAN). Accordingly, today's advanced communication devices are increasingly becoming multi-modal, i.e., capable of seamlessly operating in packet-switched IP network domains (using, for example, WLAN or Wi-MAX networks, etc.) as well as circuit-switched or packet-switched cellular network domains having networks that operate in various technologies and bands.

One of the issues typically encountered in the operation of a multi-mode UE device is determining what configuration, i.e., mode of operation, to use when the device is powered on. Usually, the decision of whether a WLAN mode of operation is desired is based on determining if a wide area cellular network is not available. In other words, a multi-mode UE device may be placed in a WLAN mode only when it is determined that there is no coverage available in the wide area cellular domain. However, such a decision may not necessarily be optimal because in some cases obtaining service in WLAN mode may be more suitable than the available wide area cellular network. Accordingly, it should be appreciated that additional granularity may be needed in optimizing the selection criteria with respect to setting a UE device's mode of operation or configuration.

### SUMMARY

The present patent disclosure is broadly directed to a system and method for facilitating determination of mode and configuration of a wireless UE device operable with a plurality of radio access technologies (RATs) in a radio network environment. In one exemplary embodiment, the wireless UE device is operable to determine its geographic area location. A logic module of the wireless UE device is adapted for interrogating a location database having time-stamped location information to determine which RATs have coverage in the geographic area location. Another logic module is adapted for interrogating a user schedule database. Responsive to the interrogation of the location and user schedule databases, the wireless UE device's mode of operation is configured accordingly.

In one aspect, an embodiment of a method is disclosed for configuring a wireless UE device operable with multiple RATs in a radio network environment, the method comprising at least one or more of the following: gathering time-stamped location information with respect to coverage of available radio networks via one or more of the multiple RATs operable with the wireless UE device; maintaining a user schedule database for correlating the wireless UE device's usage in different RATs with time information; and setting the wireless UE device's mode of operation in a particular RAT depending on interrogating the time-stamped location information and the user schedule database.

In another aspect, an embodiment of a system is disclosed for configuring a wireless UE device operable with multiple RATs in a radio network environment, the system comprising at least one or more of the following: means for gathering time-stamped location information with respect to coverage of available radio networks via one or more of the multiple RATs operable with the wireless UE device; a user schedule database for correlating the wireless UE device's usage in different RATs with time information; and means for setting the wireless UE device's mode of operation in a particular RAT depending on interrogating the time-stamped location information and the user schedule database.

In a still further aspect, also disclosed herein is an embodiment of a wireless UE device adapted to configure its mode of operation, comprising at least one or more of the following: a logic module adapted for determining a geographic area location as to where the wireless UE device is located; a logic module adapted for interrogating a location database to determine which RATs have coverage in the geographic area location; a logic module adapted for interrogating a user schedule database; and a logic module, responsive to the interrogating of the location database and the user schedule database, for configuring the wireless UE device's mode of operation.

### BRIEF DESCRIPTION OF THE DRAWINGS

A more complete understanding of the embodiments of the present patent application may be had by reference to the following Detailed Description when taken in conjunction with the accompanying drawings wherein:

FIG. 1 depicts a generalized network environment wherein an embodiment of the present patent disclosure may be practiced;

FIG. 2 depicts an exemplary embodiment of a radio coverage environment with multiple RATs operable with a wireless UE device;

FIG. 3 depicts a functional block diagram of an embodiment of a system for facilitating configuration of a wireless UE device in accordance with the teachings of the present disclosure;

FIG. 4 is a flowchart of an embodiment of a method for facilitating configuration of a wireless UE device with respect to its mode of operation;

FIGS. 5A-5C depict various exemplary location database embodiments having time-stamped location information in one or more aspects;

FIGS. 6A-6F depict further database embodiments for purposes of the present patent disclosure; and

FIG. 7 depicts a block diagram of an embodiment of a wireless UE device operable to according to the teachings of the present patent disclosure.

### DETAILED DESCRIPTION OF THE DRAWINGS

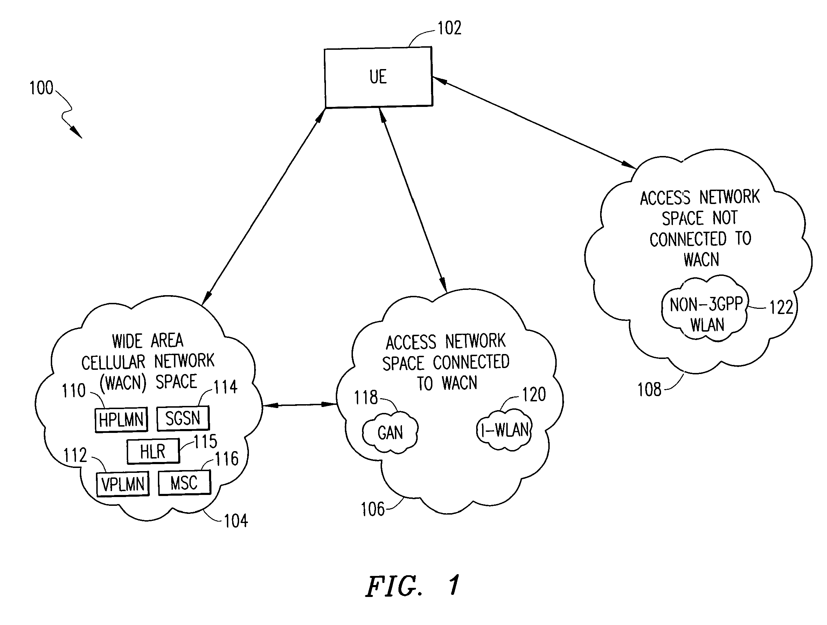

A system and method of the present patent disclosure will now be described with reference to various examples of how the embodiments can best be made and used. Like reference numerals are used throughout the description and several views of the drawings to indicate like or corresponding parts, wherein the various elements are not necessarily drawn to scale. Referring now to the drawings, and more particularly to FIG. 1, depicted therein is an exemplary generalized network environment 100 wherein an embodiment of the present patent disclosure may be practiced. A wireless user equipment (UE) device 102 may comprise any portable computer (e.g., laptops, palmtops, or handheld computing devices) or a mobile communications device (e.g., cellular phones or data-enabled handheld devices capable of receiving and sending messages, web browsing, et cetera), or any enhanced personal digital assistant (PDA) device or integrated information appliance capable of email, video mail, Internet access, corporate data access, messaging, calendaring and scheduling, information management, and the like, that is preferably operable in one or more modes of operation, e.g., via a particular radio access technology (RAT) operating in one or more frequency bands. By way of illustration, UE device 102 may operate in the cellular telephony band frequencies as well as wireless Local Area Network (WLAN) bands, or possibly in the WLAN bands alone. Further, other bands in which the UE device could operate wirelessly may comprise Wi-Max bands or one or more satellite bands. Accordingly, the network environment 100 may be visualized as comprising three broad categories of communication spaces capable of providing service to UE device 102. In wide area cellular network (WACN) space 104, there may exist any number of Public Land Mobile Network (PLMN) technologies that are operable to provide cellular telephony services which may or may not include packet-switched data services. Depending on the coverage area(s) and whether the user is roaming, WACN space 104 can include a number of home networks (i.e., home PLMNs or HPLMNs) 110, visited networks (i.e., VPLMNs) 112, each with appropriate infrastructure such as Home Location Register (HLR) nodes 115, Mobile Switching Center (MSC) nodes 116, and the like. Since the WACN space 104 may also include a General Packet Radio Service (GPRS) network that provides a packet radio access for mobile devices using the cellular infrastructure of a Global System for Mobile Communications (GSM)-based carrier network, a Serving GPRS Support Node (SGSN) 114 is exemplified therein. Additionally, by way of generalization, the PLMNs of the WACN space 104 may be operable with RATs compliant with at least one of an Enhanced Data Rates for GSM Evolution (EDGE) network, an Integrated Digital Enhanced Network (IDEN), a Code Division Multiple Access (CDMA) network, a Universal Mobile Telecommunications System (UMTS) network, or any 3^{rd} Generation Partnership Project (3GPP)-compliant network (e.g., 3GPP or 3GPP2), a Universal Terrestrial Radio Access Network (UTRAN), all operating with well known frequency bandwidths and protocols.

Further, UE device 102 is configurable to obtain service from an access network (AN) space 106 that is connected to the WACN space 104. In one implementation, the AN space 106 includes one or more generic access networks (GANs) 118 as well as any type of WLAN arrangements 120. GAN 118 is preferably operable to provide access services between UE device 102 and a PLMN core network using a broadband Internet Protocol (IP)-based network. WLAN arrangements 120 provide short-range wireless connectivity to UE device 102 via access points (APs) or "hot spots," and can be implemented using a variety of standards, e.g., IEEE 802.11b, IEEE 802.11a, IEEE 802.11g, IEEE 802.16, HiperLan and HiperLan II standards, Wi-Max standard, OpenAir standard, and the Bluetooth standard (IEEE 802.15). Accordingly, it is envisaged that the AN space 106 may be inclusive of radio access networks operable with Unlicensed Mobile Alliance (UMA)-based technologies as well.

Additionally, there may exist an access network (AN) space 108 not interfaced to the WACN space 104 that offers short-range wireless connectivity to UE device 102. For instance, AN space 108 may comprise WLANs 122 offering non-3GPP services, such as communications over "public" access points (hotels, coffee shops, bookstores, apartment buildings, parks, restaurants, educational institutions, etc., whether free or for fee), enterprise access points, and visited (other enterprise) access points where the user may not be a member of that enterprise but is allowed at least some services.

Given the mosaic of the network environment 100 in which UE device 102 may be disposed, it is possible that a multi-mode wireless UE device may be able to obtain service via one or more RATs depending on its location. Further, since the location of the wireless UE device and/or its user is usually variable based on the user's activities, day-to-day schedule, etc., it is desirable and more optimal to be able to configure the device's mode of operation based on its location.

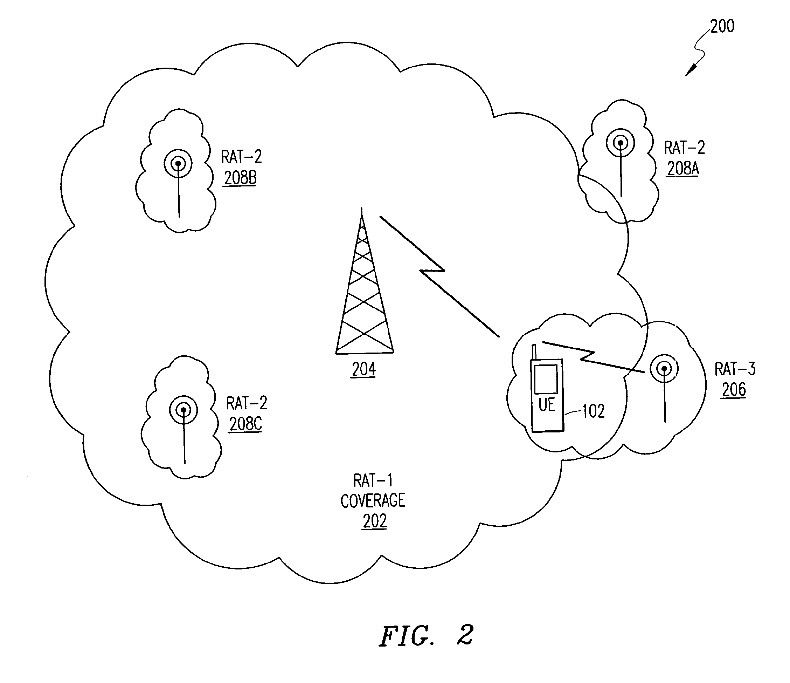

To concretize the concepts relating to configuration of a UE device's mode of operation based on its location and user schedule information, a simplified radio coverage environment 200 having multiple RATs operable with the wireless UE device 102 is shown in FIG. 2. By way of illustration, the radio network environment 200 may be envisioned as comprising multiple, possibly overlapping, coverage areas capable of providing service to UE device 102 in a number of RATs, depending on available technology coverage and the capabilities of the UE device. Reference numeral 202 refers to a RAT coverage space that is illustrative of a WACN space accessible in a particular RAT, designated as RAT-1, wherein suitable infrastructure such as, e.g., a base station tower 204 may be deployed.

Further, UE device 102 is configurable to operate in other RATs as well, e.g., using one or more GANs, WLANs, or UMA technologies, etc. as alluded to previously. By way illustration, reference numerals 208A, 208B and 208C refer to three AP coverage areas using a particular RAT, designated as RAT-2, that may be part of a WLAN operated by an enterprise, business, or any other entity, that may be frequented by the user/UE device. Likewise, reference numeral 206 refers to an AP coverage area using another RAT, designated as RAT-3, that may be part of yet another WLAN arrangement, e.g., home WLAN.

As alluded to in the foregoing sections, UE 102 is operable to multiple modes (i.e., multiple RATs) using applicable bands and frequencies. Accordingly, because which RATs may be available or more suitable is dependent on a particular geographic location, UE 102 may configure its mode of operation based on where it is located by using a location coverage database scheme that includes time-stamped information as set forth below in additional detail.

In essence, a scheme is provided that allows for time-stamped recording of the areas or locations of coverage of various RANs/RATs as the UE device traverses a geographical area or region. Information from available networks is captured in a location database to build a map with respect to coverage areas and time information. For example, the location information may be a set of identifying values for each network or RAT. By way of exemplary implementation, cell identifier information may be utilized in correlating such coverage for different networks and technologies at different times of day. For instance, as is well known, each of the wide area cellular PLMNs may be arranged as a number of cells, with each cell having sectors (e.g., typically three 120-degree sectors per base station (BS) or cell). Each individual cell may be provided with an identifier, e.g., a cell global identity or CGI parameter in GSM networks, to identify them. Also in GSM, a group of cells is commonly designated as a Location Area (LA) and may be identified by an LA Identifier (LAI). At the macro level, the PLMNs may be identified in accordance with the underlying cellular technology. Continuing with the GSM technology as an example, a GSM-based PLMN may be identified by an identifier comprised of a combination of a mobile country code (MCC) and a mobile network code (MNC). On the other hand, CDMA/TDMA-based PLMNs may be identified by a System Identification (SID) parameter and/or a Network Identification (NID) parameter. Regardless of the cellular infrastructure, all cells broadcast the macro level PLMN identifiers such that a wireless device (e.g., UE device 102) wishing to obtain service can identify the wireless network.

Similarly, coverage areas of various WLANs may also be identified using values such as Service Set Identifiers (SSIDs) or Extended SSIDs (ESSIDs). For instance, continuing to refer to FIG. 2 as an illustrative example, each RAT-2 and RAT-3 coverage area in the radio network environment 200 may be identified with a corresponding SSID/ESSID, wherein one or more WLANs may share coverage with RAT-1 space 202. However, for a given day-to-day schedule, it may be preferred that UE device 102 operate in the RAT-3 mode (because, e.g., the user is home before leaving for work and prefers to use the home WLAN) although the RAT-1 coverage is also available. Accordingly, the location identifiers for various RATs may be correlated with time information for purposes of facilitating determination of a UE device's mode and configuration.

It should also be noted that there are multiple types of location and identification information, and multiple uses of such location and identification. This information may be generally lacking in non-cellular wireless access technologies; typically only a SSID/ESSID may be provided, and there is no regulatory requirement for that SSID to be registered or to provide defined information to the user, or even to provide unique information to the user. Exemplary location and identification information may include:
A. Cellular/WACN
   1. MCC
      a. Cellular MCC (e.g., GSM)
      b. Country code associated with a microcell (or even a small macrocell) on a vehicle (e.g., ships, planes, trains, buses, etc.)
   2. MNC
   3. LAI
   4. CGI, etc.
   5. Network generated information such as current cell (and sector)
   6. Geolocation based on network information, of varying degrees of accuracy
   7. Geolocation based on handset assisted GPS (AGPS) or other positioning system
B. WLAN/GAN
   - Service Set ID (SSID)
   - Other
C. Manual input information and other information
   1. AP building and floor and room location and similar descriptive information.
   2. AP information based on location information derived from multi-mode handsets (i.e., UE devices), where the location of the handset is then transferred to a database to provide some (perhaps gross or rough) information on the location of the AP. It could be geographic information or could indicate the LAI or CGI of cellular systems.
   3. AP information, as in (2), but derived from recent information from the handset, e.g., the cell and network that the handset was viewing a few minutes ago before the user walked into a building and lost coverage. The time between loss of cellular or other information and the connection to the access point is a means of further identifying the potential lack of accuracy of the information.
   4. Indication of the type of AP.
      a. small, potentially easily moved
      b. fixed in place (at least initially)
      c. mobile, as on a ship or in a plane or on a train - there may be specific types of country codes when the devices in part of a vehicle
   5. Whether the connectivity of the AP has changed.
   6. Location (GPS or other, even manual entry) of the ship, plane or vehicle with an AP or microcell.

It should be realized by those skilled in the art that the location information may be developed by one element (i.e., a UE device) and stored in another element (AP, or microcell or base station controller or GAN controller), or even in a "universal" database within a PLMN or some other operator network that could be updated by users. Additionally, the location information may be stored within a Subscriber Identity Module (SIM) or Removable User Identity Module (RUIM) associated with a UE device. In a still further embodiment, the location information may be stored in a suitable memory of a UE device.

By way of illustration, exemplary uses of location and identification information include:
- Identification of the operator and/or PLMN or otherwise defined network
- Identification of relationship with an operator or PLMN or otherwise defined network
- Identification of location
   a. For E911 and public safety purposes
   b. Including passing of information to the PSAP (Public Safety Answer Point)
   c. For commercial purposes
- Operation of a cellular network or of an unlicensed network

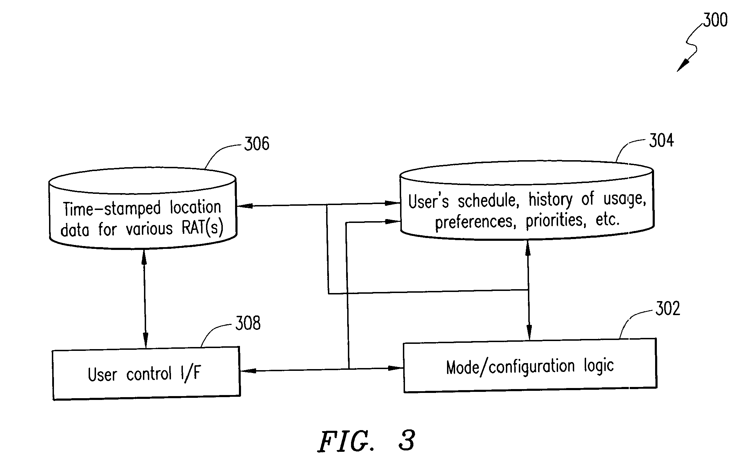

Referring now to FIG. 3, depicted therein is a functional block diagram of an embodiment of a system 300 for facilitating configuration of a wireless UE device in accordance with the teachings of the present disclosure. A mode/configuration logic module 302 provided with a UE device is operable to interrogate a user schedule database 304 as well as a location database 306. In one implementation, the user schedule database 304 may also include usage history data, preferences, prioritization logic, etc. Location-specific coverage data of various RATs is time-stamped and maintained in the location database 306, which may be updated as may be necessary. Similar to the location database 306, the user schedule database 304 may also be stored locally with respect to the UE device, i.e., in a SIM/RUIM or by way of memory storage, as alluded to previously. User control interface 308 may be provided to facilitate manual input of data into either of the databases 304, 306, as well as effectuate a manual override instruction to the mode/configuration logic 302. Responsive to the interrogation of the location and user schedule databases, the mode/configuration logic 302 is operable to set the wireless UE device's mode of operation accordingly (e.g., WLAN-mode only, WACN-mode only, or both), unless otherwise overridden by the user.

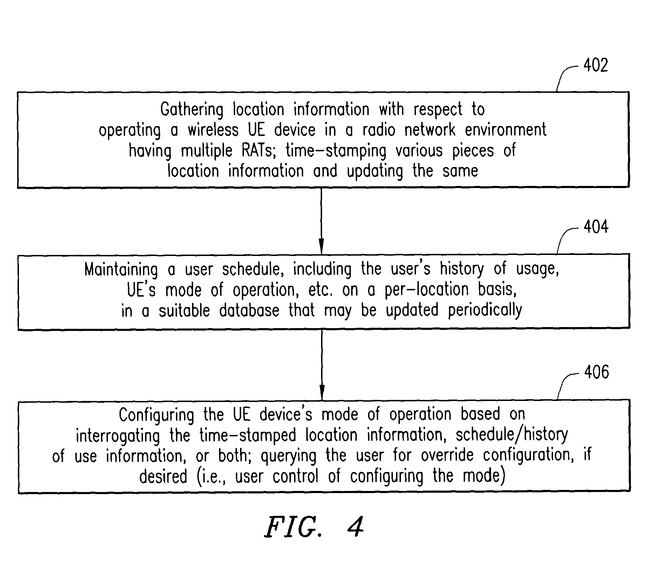

FIG. 4 is a flowchart of an embodiment of a method for facilitating configuration of a wireless UE device with respect to its mode of operation. As set forth in block 402, location information is gathered and stored with respect to operating the UE device in a radio network environment that includes multiple RANs/RATs available for service. Various pieces of the location information is time-stamped and updated in order to maintain a substantially accurate coverage map that is correlated with time information data having sufficient granularity. A user schedule is also maintained with respect to the user's history of device usage, mode of operation, et cetera, preferably on a per-location basis (block 404). As alluded to in the foregoing discussion, the UE device's mode of operation may be configured based on interrogating the time-stamped location information, user schedule information, or both, such that the UE device is set to operate in one or more particular technologies (i.e., multiple radio bearers) using appropriate frequencies and frequency bands that are more optimal for a given set of location/schedule constraints (block 406). Also, in one variation, the methodology may provide for manual override of the device mode based on user input.

Those skilled in the art should recognize upon reference hereto that the scheme of the present disclosure provides for intelligent configurability of a UE device based on user schedule data, location and ID data of WACN and WLAN networks (e.g., MAC addresses of WLAN access points, CGI data, location coordinates, etc.), device usage history, and so on. User schedule data may be provided with variable granularity specific to users. For example, a typical user schedule may track when the user arises, when the user leaves for work, key location points on commute to work, when the user arrives at work, when the user leaves the office, and if the user engages in routing after hours activities, e.g., visiting a health club or a coffee shop, their time information, etc. Also, other location information such as CGI and AGPS location with respect to local microcells, e.g., airports, mobile access points (aircraft, ships, and vehicles), and the like may be tracked for purposes of modulating the configuration/mode logic of the device. In a still further variation, various locations may be identified as "home" (user's residence), "neighbor" (neighbor's residence where the user has access privileges), "business" (entities that provide "guest" privileges, both those requiring registration and those not requiring it), and the like, for facilitating finer granularity in the determination of a UE device's operating mode.

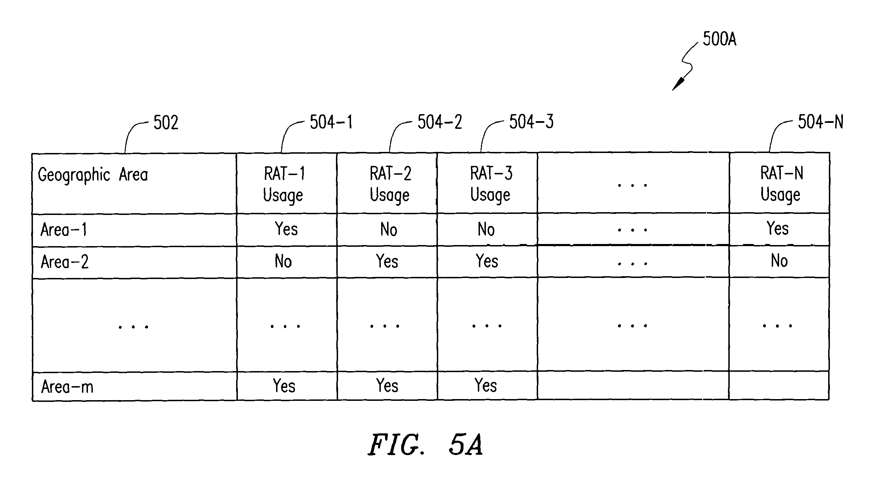

FIGS. 5A-5C depict various exemplary location database embodiments having time-stamped location information in one or more aspects. Reference numeral 500A in FIG. 5A refers to an embodiment where a number of geographic areas are identified with respect to device usage in different RATs at different times. A geographic area/location column 502 identifies various geographic areas (Area-1 through Area-m) that are of interest with respect to developing a location coverage/usage map for a UE device. For each geographic area, an indication is provided whether or not the wireless UE device has used a particular RAT/RAN thereat. Also, each RAT usage is time-stamped in order to correlate the RAT usage with time information. Thus, coverage/usage information for a plurality of RATs (RAT-1 coverage 504-1 through RAT-N coverage 504-N) may be recorded on an area-by-area basis in the database 500A. As an example, in Area-1 the UE device has obtained service with respect to networks operating in RAT-1 and RAT-N at two different times. On the other hand, RAT-2 and RAT-3 networks are not used by the UE device while located in Area-1. Accordingly, when it is determined that a UE device is in Area-1, it can advantageously set its mode of operation that is compatible with RAT-1 and/or RAT-N bands, rather than other technologies. Since the mode of operation determines which frequencies or bands may be scanned by the UE device for obtaining service, it should be appreciated that intelligent decision-making with respect to configuring a UE device may help conserve battery power and thereby extend battery life. Also, because only a subset of RATs are scanned based on the mode, network selection by the UE device can be accelerated as well.

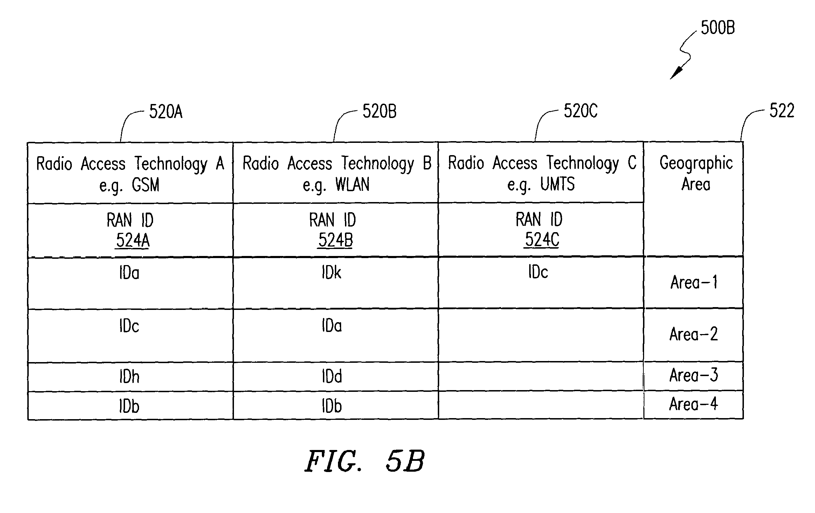

The database embodiment 500B of FIG. 5B illustrates cross-correlations among a plurality of radio access technologies, e.g., GSM technology 520A, WLAN technology 520B, and UMTS technology 520C, wherein a number of RAN IDs are provided for each technology for a particular geographic area as identified in column 522. As illustrated, column 524A identifies multiple RAN IDs for the GSM technology. Likewise, columns 524B and 524C are provided for the WLAN and UMTS technologies, respectively, with the corresponding RAN ID values. As pointed out earlier, the various IDs can be SSID/ESSID values (for WLAN), SIDs (for IS-95 and IS-136), or [MCC,MNC] combinations (for GSM). Accordingly, if a UE device determines that GSM coverage with IDa is available, it can interrogate the database structure 500B to determine that WLAN coverage (with network IDk) as well as UMTS coverage (with network IDc) is also available in Area-1. Thereafter, a prioritization scheme (e.g., based on user preferences) may be applied in selecting a particular RAN and accordingly configuring the UE device. Alternatively or additionally, a user schedule database having past device usage history may be interrogated to determine a proper mode while the UE device is located in Area-1.

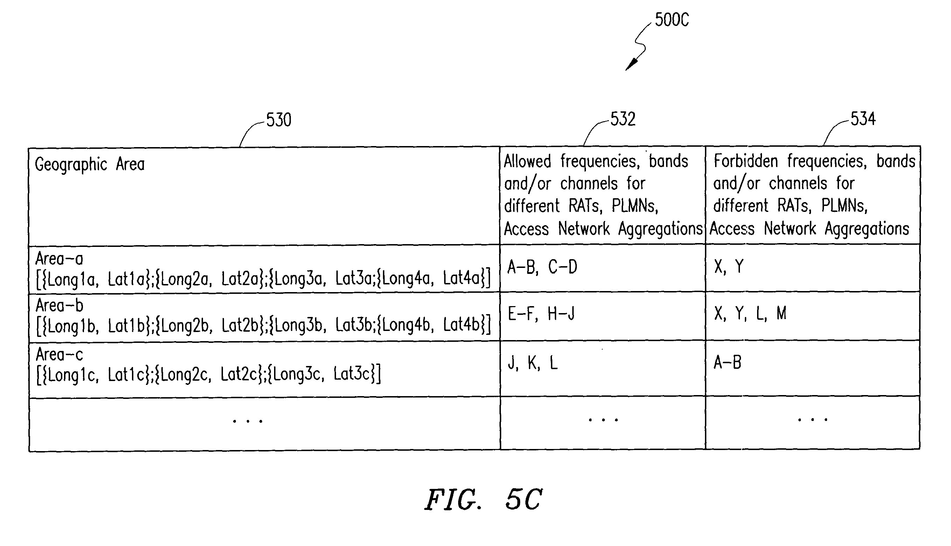

The database embodiment 500C of FIG. 5C illustrates another database arrangement that correlates geographic area information with technology coverage information. As illustrated, a number of geographic areas 530 are preferably configurably defined, each area having three or more corners that may be specified in terms of longitude/latitude coordinate pairs. Associated with each geographic area is a list of allowed frequencies, bands and/or channels, i.e., allowed frequency data 532, that a wireless UE device may use or has used for obtaining service on a RAT-by-RAT basis for available RATs in that area. Similar to the location database embodiments described before, these data may also be time-stamped. In a further modification, at least a portion of the geographic areas 532 may also be associated with a list of forbidden frequencies, bands and/or channels, i.e., disallowed frequency data 534, that a wireless UE device is barred from using for different RATs in that area. Those skilled in the art should recognize upon reference hereto that the database structure 500C is capable of a number of modifications and variations such as, e.g., providing only allowed frequency data, different areas for allowed frequency data and disallowed frequency data, as well as interfacing with a number of other database structures described hereinabove.

By way of example, a four-corner geographic area, Area-a, is defined in terms of four longitude/latitude pairs: [{Long1a, Lat1a}; {Long2a, Lat2a}; {Long3a, Lat3a}; {Long4a, Lat4a}], wherein each pair corresponds to a corner. Likewise, a triangular geographic area, Area-c, is defined in terms of three longitude/latitude pairs: [{Long1c, Lat1c}; {Long2c, Lat2c}; {Long3c, Lat3c}]. Clearly, geographic areas of various other shapes may also be defined in a similar manner for purposes of the present patent disclosure, wherein lines connecting one corner point to the adjacent corner points determine the boundaries of the areas. In a yet another implementation, the geographic areas may simply be coordinates indicative of the wireless device's position that is determined using a satellite-based positioning system (SBPS) such as the GPS.

It will be appreciated that providing GPS coordinates within a location database may add further granularity to the determination of geographic area location information. Additional embodiments of a location database may include capabilities and features such as, e.g., (i) coverage information being added from other sources (network operators, for instance); (ii) providing preferred and/or barred RAT(s) in a specific geographic area based on cost, quality, user/network preference(s), et cetera; (iii) quality metrics such as Received Signal Strength Indicator (RSSI) information for different RAT(s) in a specific geographic area; (iv) adaptive knowledge acquisition such as keeping track of the number of successful and failed attempts at accessing a specific RAT from a location area; (v) a time log of each successful/unsuccessful attempt at accessing a particular RAN; and (vi) additional filtering, prioritization schemes (if multiple RATs are available), and mode selection criteria in an area. It will be recognized that these additional capabilities may advantageously facilitate even more granularity in the mode configuration logic of a UE device.

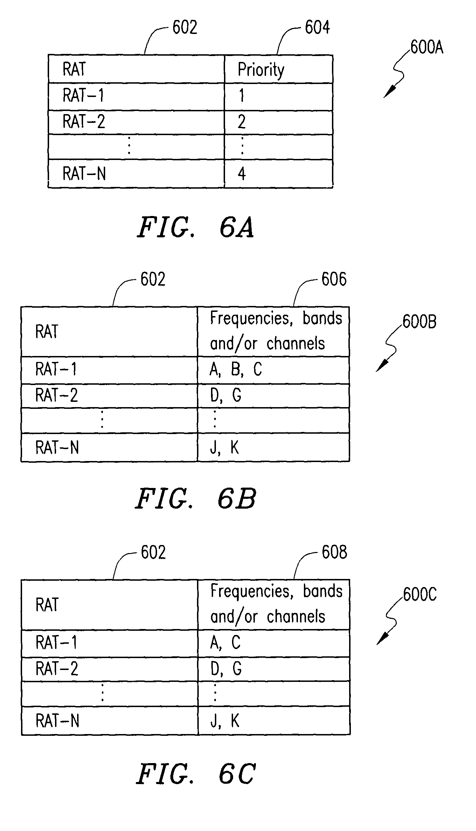

FIGS. 6A-6F depict further database embodiments for facilitating proper configuration of a wireless UE device in accordance with the teachings of the present patent disclosure. In particular, reference numeral 600A of FIG. 6A refers to a list ordering scheme operable with the UE device wherein a priority 604 is imposed on a number of RATs 602 available for service in a particular area. In FIG. 6B, reference numeral 600B refers to a scheme for specifying initial scan behavior of the device as part of its configuration. As illustrated, when the device performs an initial scan in RAT-1 mode of operation, it is provided that the scanning be performed in bands A, B, and C. In a GSM implementation, these bands could be selected from, for example, 450 MHz, 700 MHz, 850 MHz, 900 MHz, 1800 MHz, and 1900 MHz. Likewise, RAT-2 could be CDMA (IS-95) operating in two bands, 850 MHz and 1900 MHz, although additional bands may be added. Although each technology is exemplified with one or more frequency bands 606 in scheme 600B, it should be realized that there may be a technology operable with the wireless device in which no scanning bands are specified (e.g., by setting an ON/OFF flag associated with that particular technology or by explicitly not provisioning any band information). Further, the scanning order may be effectuated in serial mode or in parallel mode.

In similar fashion, reference numeral 600C in FIG. 6C refers to a scheme for specifying the device's background scan behavior. As exemplified, when the device performs a background scan in RAT-1 mode, it is provided that the scanning be performed in bands A and C as set forth in column 608. Likewise, RAT-2 mode may be scanned in bands D and G. Analogous to the initial scanning process logic, the background scanning scheme 600C may have technologies with no band information provided therefor. As to the background scan interval, it may be configured on the device on a technology-by-technology basis or with a single time parameter for all technologies. In addition, such configuration data may be provided within a fixed memory module of the device or by way of a Removable Subscriber Module or RSM (e.g., SIM, RUIM, compact Flash, Universal SIM or USIM, et cetera), as is generally the case with respect to the various database structures described elsewhere in the present patent disclosure.

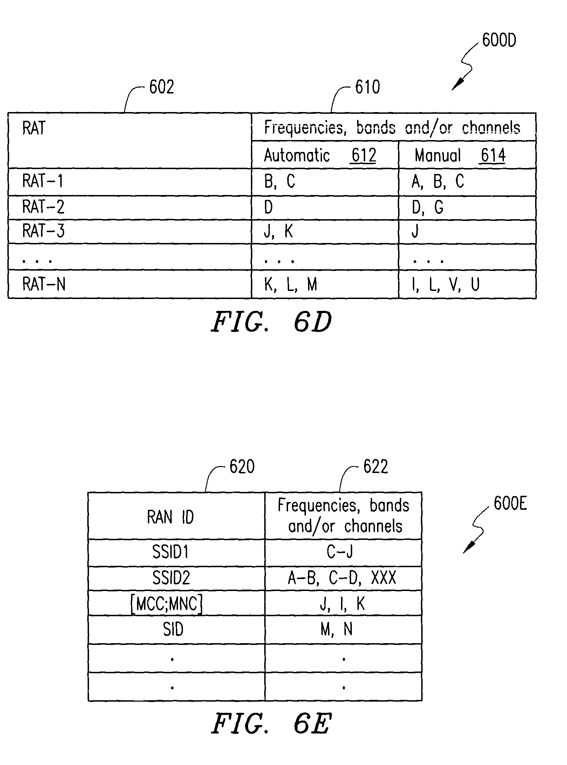

Reference numeral 600D in FIG. 6D depicts a database structure that configures different behavior for manual and automatic network selection on a RAT-by-RAT basis. As illustrated, various frequencies, bands and channels (i.e., frequency data items) 610 associated with each technology mode may be segregated based on whether automatic selection 612 or manual selection 614 is provisioned. In one implementation, the list of networks in different technologies may be presented to the user for selecting as part of its configuration.

Reference numeral 600E in FIG. 6E depicts another database or logic structure which maps information RAN identity information 620 to appropriate frequency data 622 for use by a wireless UE device as part of its configuration. As illustrated, the identity information 620 may comprise SSIDs, SIDs, as well as combination codes such as [MCC;MNC] codes. Associated with each code are one or more frequency data items 622 which the wireless UE device may use for obtaining service. As alluded to before, the frequency data may comprise complete bands, sets/ranges of frequencies or channels, etc.

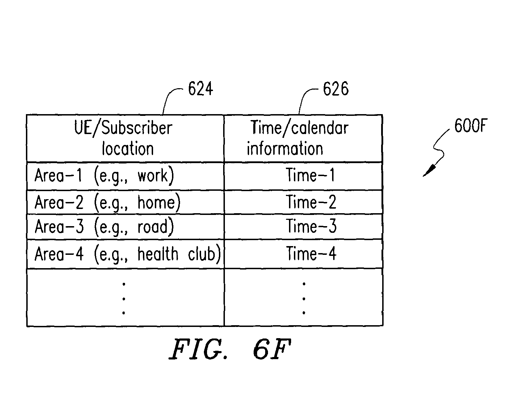

FIG. 6F depicts an exemplary location database structure 600F that explicitly maps various areas where a subscriber/UE device may be located to time information. As set forth in column 624, a number of predefined areas may comprise work, home, road, health club, etc., wherein each area may be associated with a timing parameter provided in column 626. As discussed in detail above, the areas may be identified in a number of ways. Also, the timing information associated with the respective areas may take on a number of forms, formats, et cetera (e.g., absolute times on a day-to-day basis, time ranges or windows, the timing data that is valid over longer periods of time such as weeks, months, and the like).

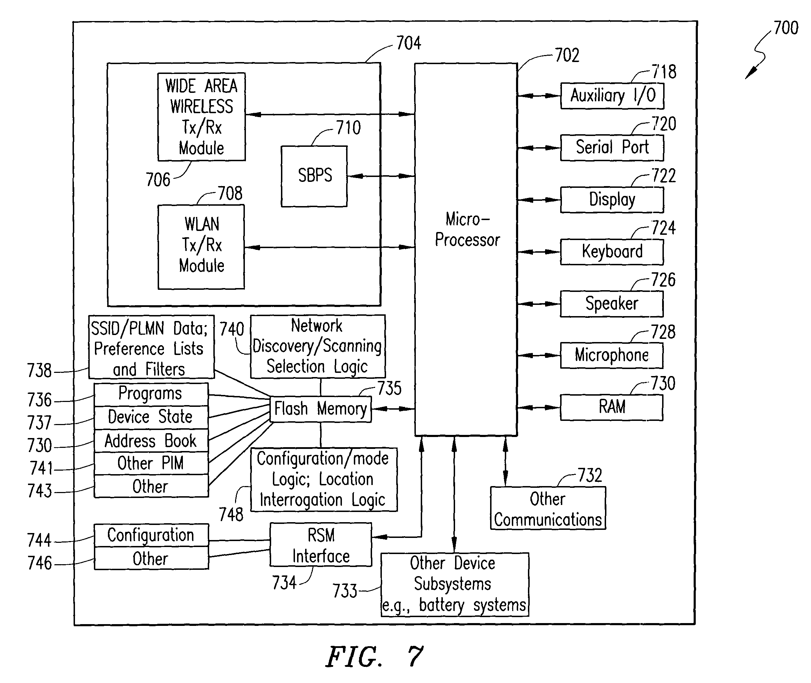

FIG. 7 depicts a block diagram of an embodiment of a wireless device or UE device 700 operable to configure its mode of operation according to the teachings of the present patent disclosure. It will be recognized by those skilled in the art upon reference hereto that although an embodiment of UE 102 may comprise an arrangement similar to one shown in FIG. 7, there can be a number of variations and modifications, in hardware, software or firmware, with respect to the various modules depicted. Accordingly, the arrangement of FIG. 7 should be taken as illustrative rather than limiting with respect to the embodiments of the present patent disclosure. A microprocessor 702 providing for the overall control of UE 700 is operably coupled to a communication subsystem 704 that includes transmitter/receiver (transceiver) functionality for effectuating multi-mode scanning and communications over a plurality of bands. By way of example, a wide area wireless Tx/Rx module 706 and a wireless WLAN/GAN/UMA Tx/Rx module 708 are illustrated. Also, a suitable SBPS/GPS receiver module 710 is provided for effectuating satellite-based location determination for purposes as described hereinabove. Although not particularly shown, each Tx/Rx module may include other associated components such as one or more local oscillator (LO) modules, RF switches, RF bandpass filters, A/D and D/A converters, processing modules such as digital signal processors (DSPs), local memory, etc. As will be apparent to those skilled in the field of communications, the particular design of the communication subsystem 704 may be dependent upon the communications networks with which the UE device is intended to operate. In one embodiment, the communication subsystem 704 is operable with both voice and data communications.

Microprocessor 702 also interfaces with further device subsystems such as auxiliary input/output (I/O) 718, serial port 720, display 722, keyboard 724, speaker 726, microphone 728, random access memory (RAM) 730, a short-range communications subsystem 732, and any other device subsystems, including battery or standby power systems, generally labeled as reference numeral 733. To control access, an RSM (SIM/RUIM/USIM) interface 734 is also provided in communication with the microprocessor 702. In one implementation, RSM interface 734 is operable with an RSM card having a number of key configurations 744 and other information 746 such as identification and subscriber-related data as well as one or more SSID/PLMN preference/priority lists, location and user schedule databases, and the like, described in detail hereinabove.

Operating system software and other control software may be embodied in a persistent storage module (i.e., non-volatile storage) such as Flash memory 735. In one implementation, Flash memory 735 may be segregated into different areas, e.g., storage area for computer programs 736 as well as data storage regions such as device state 737, address book 739, other personal information manager (PIM) data 741, and other data storage areas generally labeled as reference numeral 743. Additionally, appropriate network discovery/selection logic 740 may be provided as part of the persistent storage for executing various network discovery/scanning procedures consistent with the mode of operation configured for the UE device as set forth in the preceding sections. Additionally, another logic module 748 may be provided for facilitating configuration/mode logic, location and user schedule database interrogation, etc., also described above. Associated therewith is a storage module 738 for storing the SSID/PLMN lists, location-based selection/scanning filters, capability indicators, et cetera, also alluded to hereinabove.

Based on the foregoing discussion, it should be apparent that configuration of a multi-mode UE device can be intelligently controlled based on location as well as user schedule information such that the user-experience can be improved in a number of ways. The following description provides a non-exhaustive synopsis that exemplifies some of the specific use case scenarios.

**I. Use case scenario A: Turn-on handset (i.e., UE) at home**
- S: User turns on handset at home in the morning.
- S: No need to check for 3GPP WACN (cellular) signals.
- S: Provide a specific configuration setting for the device power-up.
- S: It is possible to tailor that setting to a particular time, so that power-up within a time window is considered "at home" power-up; at other times, the standard check for 3GPP WACN signals may occur first.
- S: Check for <home AP>, or if user has entered it, <home AP> and nearby APs. If none, go to 3GPP (cellular).

**II. Use case scenario B: Return home**
- S: Provide a user-control to easily and quickly have the UE check for <home AP>.
- S: User can use this when returning home.
- S: If no <home AP>, then go to 3GPP (cellular).

III. Use case scenario C: Home-related
- S: Travel setting (i.e., roaming), that is effective until a predetermined <date:time> setting.
- S: Indicating whether to check for local GAN/WLAN, and which particular one.
- S: Indicating repetitive scheduling - weekly or other.

**IV. Use case scenario D: Specific locations**
S Repetitive visits:
   - S: Work - can store <work AP>.
   - S: Provide a user-control to easily and quickly have the handset check for <work AP>.
   - S: Coffee Shop / bakery - can store <coffee shop AP>.
   - S: Provide a user-control to easily and quickly have the handset check for <coffee shop AP>.
S Temporary visits:
   - S: Hotel XYZ - can store <hotel xyz AP>.
   - S: Provide a user-control to easily and quickly have the handset check for <hotel AP>.
   - S: The GAN/I-WLAN may be a moving one (e.g., on an aircraft) and may or may not be associated with several PLMNs. There may be a cellular microcell on the aircraft, however, that may be identified in some manner, including a combination such as [MCC, MNC].

**V. Use case scenario E: Using location information**
Location information from a number of sources can be used to tailor the UE device to the user's patterns. Information sources include:
- S: LAI / CGI
- S: HPLMN
- S: Other PLMNs, whether preferred or forbidden
- S: AGPS (Assisted Global Positioning System) or other non-cellular band location system
- S: Manual input

**VI. Use case scenario F: Tailoring of the system selection**
The locations may be individually used to tailor the mode of operation. Examples include:
S connected to <home AP>
S connected to <work AP>
S connected to <[other] AP>, etc.

It is believed that the operation and construction of the embodiments of the present patent application will be apparent from the Detailed Description set forth above. While the exemplary embodiments shown and described may have been characterized as being preferred, it should be readily understood that various changes and modifications could be made therein without departing from the scope of the present disclosure as set forth in the following claims.

## Claims

1. A method for configuring a wireless user equipment (UE) device (102) operable with multiple radio access technologies (RATs) in a radio network environment (100), comprising:
gathering (402) time-stamped location information with respect to coverage of available radio networks via one or more of said multiple RATs operable with said wireless UE device (102);
maintaining (404) a user schedule database (600F) for correlating said wireless UE device's usage in different RATs with time information; and
setting (406) said wireless UE device's mode of operation in a particular RAT depending on interrogating said time-stamped location information and said user schedule database.

2. The method for configuring a wireless UE device (102) as recited in claim 1, wherein said wireless UE device's mode of operation is set in a particular RAT that is compliant with at least one of a Wireless Local Area Network (WLAN) standard selected from IEEE 802.11b standard, IEEE 802.11a standard, IEEE 802.11g standard, IEEE 802.16 standard, HiperLan standard, HiperLan II standard, Wi-Max standard, OpenAir standard, and Bluetooth standard.

3. The method for configuring a wireless UE device (102) as recited in claim 1, wherein said wireless UE device's mode of operation is set in a particular RAT that is compliant with at least one of a General Packet Radio Service (GPRS) network, an Enhanced Data Rates for Global System for Mobile Communications (GSM) Evolution (EDGE) network, a 3^{rd} Generation Partnership Project (3GPP)-compliant network, an Integrated Digital Enhanced Network (IDEN), a Code Division Multiple Access (CDMA) network, a Universal Mobile Telecommunications System (UMTS) network, and a Time Division Multiple Access (TDMA) network.

4. The method for configuring a wireless UE device (102) as recited in claim 1, claim 2 or claim 3, wherein said time-stamped location information is gathered based on a satellite-based positioning system.

5. The method for configuring a wireless UE device (102) as recited in claim 1, claim 2 or claim 3, wherein said time-stamped location information is gathered based on a cell identifier code available to said wireless UE device (102).

6. The method for configuring a wireless UE device (102) as recited in claim 1, claim 2, claim 3, claim 4 or claim 5, further comprising:
before setting said wireless UE device's mode of operation depending on said interrogating, querying a user of said wireless UE device (102) for an override configuration; and
responsive to an input by said user, configuring said wireless UE device's mode of operation.

7. The method for configuring a wireless UE device (102) as recited in claim 1, claim 2, claim 3, claim 4, claim 5 and claim 6, further comprising: if multiple RATs are determined to have coverage in a particular location at a particular time, applying a prioritization scheme for choosing a particular RAT for setting said wireless UE device's mode of operation.

8. The method for configuring a wireless UE device (102) as recited in claim 1, claim 2, claim 3, claim 4, claim 5 and claim 6, further comprising: if multiple RATs are determined to have coverage in a particular location at a particular time, manually choosing a particular RAT for setting said wireless UE device's mode of operation.

9. A wireless user equipment (UE) device (700) adapted to configure its mode of operation, comprising:
a logic module (748) adapted for interrogating a location database having time-stamped location data to determine which radio access technologies (RATs) have coverage in a particular geographic area location where said wireless UE device (700) is located;
a logic module (748) adapted for interrogating a user schedule database; and
a logic module (748), responsive to said interrogating of said location database and said user schedule database, for setting said wireless UE device's mode of operation.

10. The wireless UE device (700) as recited in claim 9, further comprising means (710) for determining said particular geographic area location based on a satellite-based positioning system.

11. The wireless UE device (700) as recited in claim 9, further comprising means (740) for determining said particular geographic area location based on a cell identifier code available to said wireless UE device (700).

12. The wireless UE device (700) as recited in claim 9, further comprising means (740) for determining said particular geographic area location based on a location area code available to said wireless UE device (700).

13. The wireless UE device (700) as recited in claim 9, claim 10, claim 11, or claim 12, wherein said location database is locally associated with said wireless UE device (700).

14. The wireless UE device (700) as recited in claim 9, claim 10, claim 11, claim 12 or claim 13, wherein said user schedule database is locally associated with said wireless UE device (700).
